# EUROPEAN PATENT SPECIFICATION

(11) **EP 0 448 862 B1**
(45) Date of publication and mention of the grant of the patent: **11.12.1996**
(21) Application number: 90310690.4
(22) Date of filing: 28.09.1990
(51) Int. Cl.: G02F 1/1339

(54) **Particulate spacers and a method for producing the same, and a method for producing a liquid crystal display cell by using the particulate spacers**
Abstandshalter und Verfahren zu deren Herstellung sowie Verfahren zur Herstellung einer Flüssigkristallzelle unter Benutzung dieser Abstandshalter
Espaceurs, leur procédé de fabrication et procédé de fabrication d'une cellule à cristal liquide utilisant ces espaceurs

(30) Priority: 27.03.1990 JP 80428/90; 31.05.1990 JP 143369/90; 31.05.1990 JP 143368/90
(43) Date of publication of application: 02.10.1991
(73) Proprietor: SEKISUI FINE CHEMICAL CO., LTD., Kita-ku, Osaka 530 (JP)
(72) Inventor: Saiuchi, Kazuo, Ohtsu-shi, Shiga-ken (JP); Yamada, Kunikazu, Kurita-gun, Shiga-ken (JP); Kanki, Kazuhiko, Uji-shi, Kyoto (JP)
(74) Representative: Jones, Michael Raymond

(56) References cited:
- EP-A- 0 150 269
- EP-A- 0 234 816
- GB-A- 2 011 110
- US-A- 4 678 284
- PATENT ABSTRACTS OF JAPAN, vol. 13, no. 576 (P-979)(3924) 20 December 1989 ; & JP-A-1 243 027
- PATENT ABSTRACTS OF JAPAN, vol. 13, no. 588 (M-912)(3936) 25 December 1989 ; & JP-A-1 247 154

## Description

The present invention relates to particulate spacers and a method for producing the same for use as spacers in liquid crystal display cells, spacers in electrochromic display devices, or other spacers for maintaining a constant distance between films, sheets or blocks. The present invention also relates to a method for producing liquid crystal display cells employing the particulate spacers.

Liquid crystal display cells have a pair of transparent substrates with electrodes, a set of spacers which maintains the two substrates at a constant distance, a liquid crystal composition placed between the two substrates and a sealing material for sealing the periphery of the gap space between the two substrates. Since a fixed gap must be maintained between the pair of substrates in the liquid crystal display cell, solid particles of nearly constant diameter are placed between the two substrates at prescribed intervals as spacers. Examples of this type of particles are disclosed in Japanese Laid-Open Patent Publication Nos. 57-189117, 59-24829, 62-296122, 63-200126 and 1-144021.

However, in conventional liquid crystal display cells, these particles are not fixed to the substrates, and consequently the following shortcomings arise.
(1) In order to remove minute foreign matters, air blown onto the substrates in the process of assembling the liquid crystal display cell may cause scattering of particulate spacers, resulting in loss of the spacers.
(2) The particulate spacers may be shifted on the surface of the substrates in the process of injecting liquid crystal composition into the liquid crystal display cell.
(3) The particulate spacers may be displaced by the electrical or hydrodynamic forces arising while the liquid crystal display cell is in operation.

Elimination of these shortcomings requires that the particulate spacers be fixed to the substrates.

EP-A-0234816 discloses processes for preparing mono-dispersed particles. Particles are obtained by hydrolysis of a metal alkoxide. The particles obtained are coated on the surface thereof with a synthetic resin, and the resin coated particles are used as spacer particles for display devices. However, this document does not disclose a particulate spacer having an adhesive resin layer made of an epoxy resin composition and does not disclose an adhesive resin layer made of a hot-melt type resin layer.

The English Abstract of JP-A-1247154 discloses a method for forming a uniform hot melt type resin layer by forming a titanium oxide layer on the surface of solid particles while the coated solid particles are dispersed in a hot melt type resin solution or emulsion. The document does not disclose an epoxy resin layer made of an epoxy resin composition.

The particulate spacer of this invention, which overcomes the above-discussed and numerous other disadvantages of the prior art, comprises a core particle and an adhesive resin layer which is formed on the surface of the core particle and which displays adhesion properties when heated to a predetermined temperature, the said adhesive resin layer being an epoxy resin layer consisting of an epoxy resin composition.

In a preferred embodiment, the core particle is colored.

In a preferred embodiment, the above-mentioned particulate spacer further comprises an intermediate layer made of titanium oxide polymer, the said intermediate layer being disposed between the surface of the core particle and the adhesive resin layer.

A method for producing particulate spacers of this invention comprises the steps of: treating core particles with an organic titanate compound to form a titanium oxide polymer layer on the surface of the core particles; and treating the treated core particles with an epoxy resin composition to form an epoxy resin layer as an adhesive resin layer on the surface of the titanium oxide polymer layer.

The particulate spacer of this invention comprises a colored core particle and an adhesive resin layer which is formed on the core particle and which displays adhesion properties when heated to a predetermined temperature, the said adhesive resin layer consisting of a hot-melt type resin.

The particulate spacer further comprises a titanium oxide polymer layer disposed between the core particle and the hot-melt type resin layer.

A method for producing particulate spacers of this invention comprises the steps of: treating colored core particles with an organic titanate compound to form a titanium oxide polymer layer on the surface of the core particles; and treating the treated core particles with a hot-melt type resin to form a hot-melt type resin layer as an adhesive resin layer on the surface of the titanium oxide polymer layer.

A method for producing a liquid crystal display cell of this invention comprises: a pair of substrates having an electrode on the surface thereof, at least one of which is transparent, the substrates being disposed at a constant gap so that the respective electrodes of the substrates face to each other; a sealing material filling the peripheral portion of the gap between the substrates; particulate spacers dispersed in the gap space between the substrates to maintain a constant gap between the substrates; and a liquid crystal composition filling the gap between the substrates; wherein

the method comprises the steps of: dispersing particulate spacers over the surface of a first substrate; pressing the particulate spacers onto the first substrate with a pressing means to ensure the adhesion of the particulate spacers to the first substrate; detaching the pressing means from the particulate spacers; placing a second substrate above the first substrate so as to interpose the particulate spacers therebetween; and sealing the peripheral portion of the gap between the first and second substrates with a sealing material.

In a preferred embodiment, the above-mentioned pressing step is conducted whilst simultaneously applying heat.

Thus, the invention described herein makes possible the objectives of: (1) providing particulate spacers for liquid crystal display cells, the particulate spacer having the ability to adhere to the substrates and therefore being not scattered about or shifted on the substrate surfaces; (2) providing particulate spacers which can securely maintain a nearly constant gap between a pair of substrates and thereby improve the quality of a liquid crystal display cell; (3) providing particulate spacers comprising a thin uniform hot-melt type resin layer or epoxy resin layer formed on the surfaces of the core particles; (4) providing a liquid crystal display cell with high contrast and high performance; and (5) providing a liquid crystal display cell having a pair of substrates, the gap therebetween having the ability to be kept at a constant rate with precision.

For a better understanding of the invention and to show how the same may be carried into effect reference will now be made, by way of example only, to the accompanying drawings, in which:
Figure 1 is a cross-sectional view showing the main portions of a liquid crystal display cell of the present invention.
Figure 2 is an enlarged cross-sectional view showing the particulate spacer of the present invention.
Figure 3 shows an enlarged cross-sectional view showing the main portions of the liquid crystal display cell of the present invention.

### [Core Particles]

The core particles used in the present invention are solid particles made of resin or an inorganic substance.

The types of resins suitable for the formation of such particles include the following; thermoplastic resins such as polyethylene, polypropylene, polymethylpentene, polyvinyl chloride, polytetrafluoroethylene, polystyrene, polymethyl methacrylate, polyethylene terephthalate, polybutylene terephthalate, polyamides, polyimides, polysulfone, polyphenyleneoxide, polyacetal; and thermosetting resins such as epoxy resins, phenol resins, melamine resins, unsaturated polyester resins, polydivinylbenzene, divinylbenzene-styrene copolymer, divinylbenzene-acrylate copolymers, polydiallylphthalate, polymer of triallyl isocyanurate, polymer of benzoguanamine, etc.

Among the aforesaid resins, those especially desirable for the formation of the core particles are melamine resins, divinylbezene copolymer, divinylbenzene-styrene copolymer, divinylbenzene-acrylate copolymers, polydiallylphthalate, etc.

Moreover, the types of inorganic substances suitable for the formation of such core particles include the following: silicate glass, borosilicate glass, lead glass, soda-lime glass, alumina, alumina silicate, etc. Among these, silicate glass and borosilicate glass are especially suitable for the present purpose.

The shapes of the core particles are not restricted. However, particles of spherical, ellipsoidal or cylindrical shapes with the following dimensions are most suitable. For spherical particles, diameters in the range of 0.1 µm to 1000 µm are appropriate, and those in the range of 1 µm to 100 µm are especially desirable. For ellipsoidal particles, short-axis diameters in the range of 0.1 µm to 1000 µm are appropriate, and those in the range of 1 µm to 100 µm are especially desirable, while the ratio of long to short axis diameters should be in the range of 1 to 10, and more preferably in the range of 1 to 5. For cylindrical particles, diameters in the range of 0.5 µm to 1000 µm are appropriate, and those in the range of 3 µm to 100 µm are especially desirable, while the ratio of the length to the diameter of the cylinders should be in the range of 1 to 50, and more preferably 1 to 10. Ordinarily, the core particles used for the purposes of the present invention are of the types which are generally used for spacers for liquid crystal display cells, particles for labeling purposes, standard particles for various measurements, carriers for diagnostic tests, etc.

The core particles are colored, as desired. In the case of resin particles, solid core particles are treated with carbon black, disperse dyes, acidic dyes, basic dyes, or a metal oxide, resulting in colored core particles.

In the case of core particles made of inorganic substances, a coloring method appropriate for use in obtaining the colored core particles includes the process of forming resin films on the surfaces of the inorganic particles, and then coloring these coated particles by decomposition or carbonization at high temperatures. Also, in cases where the material used for the formation of the particles is itself colored, the particles can, of course, be used without any particular additional coloring treatment.

The colored core particles obtained by coloring core particles made of a cross-linked resin after being treated with acidic treating agent are preferably used.

The cross-linked resin used for the core particles are prepared from ethylenically unsaturated monomers. The cross-linked resin is made of a monomer having two or more ethylenically unsaturated groups, a monomer having one ethylenically unsaturated group, or a combination of a monomer having two or more ethylenically unsaturated groups and a monomer having one ethylenically unsaturated group which can be copolymerized with the monomer having two or more ethylenically unsaturated groups. In particular, the use of monomers having two or more ethylenically unsaturated groups in an amount of at least 5% by weight, and preferably 10% by weight based on the total weight of the ethylenically unsaturated monomers, is desirable. If the amount of monomers having two or more ethylenically unsaturated groups is less than 5% by weight, then the hardness of the resin core particles so obtained is low, and moreover, these core particles cannot be colored to a deep shade.

The monomers having two or more ethylenically unsaturated groups include the following types of monomers (1)-(4).
(1) x-methylolalkyl y-acrylates (or methacrylates) (wherein x and y are integers satisfying the condition x ≧ y ≧ 2). Specifically, this category includes, for example, tetramethylolmethane tetra-acrylate (or -methacrylate), tetramethylolmethane triacrylate (or trimethacrylate), tetramethylolmethane diacrylate (or dimethacrylate), trimethylolpropane triacrylate (or trimethacrylate), dipentaerythritol hexaacrylate (or -methacrylate), dipentaerythritol pentaacrylate (or -methacrylate), glycerol triacrylate (or methacrylate) and glycerol diacrylate (or methacrylate), etc.
(2) Polyoxyalkylene glycol diacrylates (or methacrylates), specifically, this category includes, for example, polyethylene glycol diacrylate (or dimethacrylate), polypropylene glycol diacrylates (or dimethacrylate), etc.
(3) Triallyl cyanurates (or isocyanurates), triallyl trimellitate, etc.
(4) Divinylbenzene, diallyl phthalates, diallyl acrylamides, etc.

The monomers having one ethylenically unsaturated groups which are capable of copolymerizing with the aforesaid monomer having two or more ethylenically unsaturated groups include, styrene, vinyltoluene, acrylonitrile, alkyl acrylates (or methacrylates), vinyl esters, acrylic (or methacrylic) acid, hydroxyalkyl acrylates (or methacrylates), acrylamide (or methacrylamide), N-methylol acrylamide (or methacrylamide), N,N-dimethylaminopropyl acrylamide, etc.

Resin core particles can be manufactured by polymerizing the aforesaid monomers in the presence of radical catalysts. This polymerization should preferably be conducted at the temperature of the boiling points or lower of the dispersion medium and the various monomers used. As radical catalysts, ordinary radical-generating catalysts such as organic peroxides or azo compounds are appropriate for the present purpose. The applicable peroxides include benzoyl peroxide, lauroyl peroxide and di-t-butyl peroxide, while the applicable azo compounds include, for example, 2,2'-azobisisobutyronitrile, 2,2'-azobis(2,4-dimethylvaleronitrile), etc.

Next, the resin core particles so obtained are treated with acidic treating agent under specified conditions. The treatment can be performed at a temperature in the range of from room temperature to 200°C. The bath ratio of the treatment is in the range of 1 : 2 to 1 : 50. Applicable acidic treating agents include concentrated sulfuric acid, fuming sulfuric acid, sulfur trioxide, sulfurous acid, sulfites, hydrogensulphites, sulfonyl chloride, chlorosulfuric acid, fluorosulfuric acid and aminosulfonic acid. One or more of the substances can be used for the present purpose.

When the resin core particles are treated with the acidic treating agent in this manner, the residual unreacted ethylenically unsaturated groups undergo addition reactions and/or substitution reactions with the acid. Thus, the acid becomes chemically bonded to the core particles. In particular if a large amount of monomers having two or more ethylenically unsaturated groups are used, then the acidic treating agent mentioned above reacts with the ethylenically unsaturated groups remaining on the surface of the resin core particle to form sulfonic acid ester under comparatively modelate reaction conditions. If the resin core particles are manufactured using a monomer having an aromatic ring, then sulfonic acid groups can be introduced onto the aromatic ring by means of sulfonation reactions.

Next, the resin core particles which have been treated with acidic treating agent in the above manner are treated with a dye. The dyeing is appropriately performed at a temperature of 60°C - 120°C for a period of 30 minutes to 15 hours, at a dye concentration of 0.5 - 5% by weight, with a bath ratio of 1:30 to 1:10. The pH of the dying solution is adjusted to a value in the range of 2 - 6 using acetic acid or sodium acetate. The dyes used for this purpose are, preferably, basic dyes which can combine chemically with the acidic treating agent and which have been bonded to the aforesaid resin core particles as mentioned above. Generally, these basic dyes are hydrochlorides of aromatic bases containing chromophores. The basic groups may contain amino groups (-NH₂), alkylamino groups (-N(CH₃)₂), etc. The basic dyes contain no acidic groups, and when the basic dyes are dissolved in water, dye ions are formed into cations. Specifically, the basic dyes include triphenylmethane derivatives, anthraquinone derivatives, azo compounds, methine compounds and oxazine derivatives, etc.

This coloring treatment induces ionic bonding of the basic dye to the sulfonic acid groups on the resin core particles, after which the colored particles can be recovered by selective filtration and washing. This treatment serves to eliminate the residual dye as well as the inorganic salts formed as by-products by the aforesaid reaction. Thus, colored particles in pure form, containing no alkali metals or other impurities can be obtained.

As described above, since the dyeing of the resin core particles involves the chemical bonding of the dye to the resin core particles, a uniform deep coloring can be achieved with a small amount of dye, moreover, the colored core particles so obtained possess excellent solvent tolerance.

If such colored core particles are used as spacers in liquid crystal display cells, then, since the optical transmittance of such particles is low, high-quality liquid crystal display cells with excellent display contrast can be prepared.

Since the central portions of the colored core particles are not acid-treated, a colored layer is formed only on the periphery of the colored core particles. Therefore, the colored core particles can maintain an adequate state of hardness.

### [Titanium Oxide Polymer Layer]

The particulate spacer of the present invention comprises, if necessary, an intermediate layer made of titanium oxide polymer between the surface of the core particle and the adhesive resin layer. Especially, when the adhesive resin layer is made of a hot-melt type resin or epoxy resin, the titanium oxide polymer layer increases the adhesion between the core particle and the adhesive resin layer, and a uniform and relatively thin adhesive resin layer can be formed on the surface of the core particle. The following method, for example, can be employed for the formation of the titanium oxide polymer layer on the surfaces of the core particles.

First, an organic titanium compound is dissolved in an appropriate solvent, and the solution so obtained is applied onto the surfaces of the core particles, after which the organic titanium compound is hydrolyzed to form the desired titanium oxide polymer layer.

The organic titanium compounds applicable for the present purpose include, for example, titanium tetraethoxide (Ti(OC₂H₅)₄), titanium tetrapropoxide (Ti(OC₃H₇)₄), titanium tetrabutoxide (Ti(OC₄H₉)₄), titanium tetrapentoxide (Ti(OC₅H₁₁)₄), titanium tetrahexoxide (Ti(OC₆H₁₃)₄), titanium tetrakis(2-ethylhexoxide) (Ti[OCH₂CH(C₂H₅)C₄H₉]₄), titanium tetradodecyloxide (Ti(OC₁₂H₂₅)₄), titanium tetrastearoxide (Ti(OC₁₇H₃₅)₄), titanium dipropoxide bis(acetylacetonate)(Ti(OC₃H₇)₂[OC(CH₃)CHCOCH₃]₂), titanium dibutoxide bis(triethanolaminate) (Ti(OC₄H₉)₂[OC₂H₄N(C₂H₄OH)₂]₂), titanium dihydroxide bis(lactate) (Ti(OH)₂[OCH(CH₃)COOH]₂), titanium propoxyoctylene glycolate (Ti[OCH₂CH(C₂H₅)CH(C₃H₇)OH]₄), etc. Among these, the compounds particularly desirable for the present purpose are titanium tetrapropoxide, titanium tetrabutoxide, titanium tetrakis(2-ethylhexoxide), titanium dipropoxide bis(acetylacetonate) and titanium dibutoxide bis(triethanolaminate).

Examples of the solvent in which the organic titanium compound is dissolved include n-hexane, cyclohexane, benzene, toluene, trichlorethylene and Freon-113.

An appropriate method for applying the aforesaid organic titanium compounds onto the surfaces of the core particles includes the process of immersing the core particles in the aforesaid solution and evaporating the solvent while thoroughly mixing the ingredients. After evaporation of the solvent, heating at a temperature of 60 to 100°C may be desirable in some cases.

It is presumed that the organic titanium compound applied on the surfaces of the core particles in the above-described manner reacts with the moisture in the ambient air, thereby undergoing hydrolysis and subsequent polycondensation. The polycondensation product (i.e., titanium oxide polymer) has the following formula: 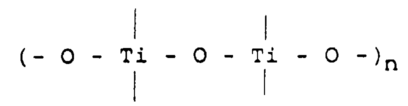 wherein n is an integer

The amount of titanium oxide polymer in the layer formed on the surfaces of the core particles, expressed in terms of weight of titanium, should preferably be in the range of 0.01 mg-500 mg, more preferably, 0.1 mg-100 mg, per square meter of surface area of the core particles. If the amount of the titanium oxide polymer layer, expressed in terms of weight of titanium, were greater than 500 mg per square meter of surface area of the core particles, then various undesirable results would occur, such as the decrease of electrical resistance of the particulate spacers to be obtained.

Because the wettability of resin to the titanium oxide polymer layer is excellent, the resin can be coated on the titanium oxide polymer layer in the form of a thin layer. Thus, the particulate spacers are not susceptible to aggregation, and moreover, the resin layer can be formed with good adhesion to the core particle surfaces.

### [Adhesive Resin Layer]

The adhesive resin layer formed on the surface of the core particle is made of a hot-melt type resin or epoxy resin.

### [Adhesive resin layer made of hot-melt type resins]

The hot-melt type resin melts and displays adhesive properties when heated to a specific temperature. The hot-melt type resin is chosen so that the melting temperature of this hot-melt type resin is lower than the softening temperature or decomposition temperature of the core particles. The desirable melting temperature of the hot-melt type resin is in the range of 85°C-200°C, or more desirably 90°C-170°C, while the thickness of the hot-melt type resin should desirably be in the range of 0.01 µm-100 µm.

The hot-melt type resins appropriate for use in the process of the present invention are as follows.

### (A) Polyolefines

Waxy polyethylene, oxidized waxy polyethylene, low-density polyethylenes, high-density polyethylenes, oxidized polyethylene, ethylene-vinyl acetate copolymer, ethylene-vinyl acetate-carbon monoxide terpolymer, ethylene-acrylic acid copolymer, ethylene-acrylate copolymers, ethylene-vinyl acetate copolymer containing carboxyl groups such as ethylene-vinyl acetate-acrylic acid terpolymer, ethylene-vinyl acetate-vinyl alcohol terpolymer, ethylene-sulfur oxide copolymer, sulfonated polyethylenes, ethylene-propylene copolymer, polypropylene, hydrogenated polybutadiene, hydrogenated polyisoprene, hydrogenated butadiene-styrene block copolymer, hydrogenated isoprene-styrene block copolymer, and oxidized substances of these materials.

### (B) Other types of resins

Polymethylacrylate, polyethylacrylate, polybutylacrylate, polybutadiene, polyisoprene, polyamides, polyurethanes, polyesters, polyimides, polyvinyl acetal, polyvinyl butyral, butadiene-styrene random copolymers, butadiene-styrene block copolymer and isoprene-styrene block copolymer, etc.

The desirable among the types of resins indicated in (A) and (B) above are the polyolefines listed under (A), the particularly preferable varieties being waxy polyethylene or an oxidized substance thereof, ethylene-vinyl acetate copolymer or an oxidized substance thereof, and ethylene-vinyl acetate copolymers containing carboxyl groups. These resins have comparatively low melting points or softening temperatures, and consequently the desired adhesion to the substrates is readily obtained if particles coated with these resins are used as spacers in liquid crystal display cells. Moreover, although the adhesiveness of the aforesaid resins is inferior to that of certain other resins such as polyamides, their polarity is low, therefore particles coated with the resin do not derange the orientation of the liquid crystal composition when the coated particles are used as spacers in liquid crystal display cells.

The following two methods (1) and (2) can be employed for forming hot-melt type resin layers upon the core particle surfaces using the above-mentioned hot-melt type resins.
(1) First, the hot-melt type resin is dissolved in a suitable solvent, i.e., a solvent in which the resin is adequately soluble and which is immiscible with water. Next, this resin solution is added to a suitable amount of water containing a surfactant and emulsified by agitation. The size of the emulsified globules in this emulsion should desirably be 1 µm or smaller.
   Then, the aforesaid core particles are added to this emulsion and suspended in the emulsion by vigorous agitation. Then, while maintaining this suspended state, the suspension is gradually cooled to a temperature below the temperature at which the resin is deposited on the core particles. Alternatively, a precipitant is gradually dripped into the suspension. The precipitant is miscible with the solvent and lowers the solubility of the hot-melt type resin in the solvent. It is effective to employ the process of dripping the precipitant into the suspension while simultaneously lowering the temperature of the suspension.
   In the above process, the concentration of the hot-melt type resin in the initial resin solution should desirably be in the range of 0.1 to 20% by weight.
   The amount of the core particles added should preferably not exceed 100 g per liter of the aforesaid emulsion. The applicable surfactants include polyoxyethylene alkyl phenyl ethers, polyoxyethylenepolyoxypropylene block copolymer, sorbitan esters, glycerin esters, alkylbenzenesulfonic acids, etc. If a polyoxyethylene alkyl phenyl ether is used as the surfactant, then the amount of this surfactant should desirably be in the range of 0.01 g to 0.5 g per 100 ml of water. The ratio of the aqueous surfactant solution to the resin solution should be in the range of 50:1 to 1:5 by volume, or still more preferably from 20:1 to 3:1 by volume.
   When the temperature of the system is reduced in the above-described process, the initial liquid temperature should desirably be 60°C - 100°c, while the final temperature after cooling should desirably be 0°C - 50°C. The rate of temperature reduction should preferably be in the range of 0.01°C/min. and 10°C/min. Moreover, if a precipitant is added during the above process, then the precipitant should preferably be added at a rate of 0.01 cc/min. to 1 cc/min.
   When the aforesaid process is completed, the adhesive resin layer made of the hot-melt type resin is formed onto the surface of the core particles. Next, the mixture is filtered or centrifuged in order to separate these coated particles from the system, then the obtained particles are washed with a suitable detergent and, if necessary, dried by heating, thereby obtaining the desired particulate spacers.
(2) After dissolving the hot-melt type resin in a suitable solvent, the aforementioned core particles with a surface layer of titanium oxide polymer are added and suspended in the solution by vigorous agitation. Then, while maintaining this suspended state, the suspension is gradually cooled to a temperature below the temperature at which the resin is deposited on the core particles. Alternatively, a precipitant is gradually dripped into the suspension. The precipitant is miscible with the solvent and lowers the solubility of the hot-melt type resin in the solvent. It is effective to employ the process of dripping the precipitant into the suspension while simultaneously lowering the temperature of the suspension.

In the above process, the concentration of the hot-melt type resin in the initial resin solution should desirably be in the range of 0.1 to 20% by weight. Also, the amount of titanium oxide polymer-coated particles added per liter of the aforesaid emulsion should preferably not exceed 100 g. If the temperature of the system is reduced in the above-described process, than the initial temperature should be from room temperature to 200°C, while the final temperature after cooling should desirably be from -30°C to 50°C. The rate of temperature reduction should preferably be in the range of 0.01°C/min. to 10°C/min. Moreover, if a precipitant is added during the above process, then the precipitant should preferably be added at a rate of 0.01 cc/min. to 1 cc/min.

When the aforesaid process is completed, the adhesive resin layer made of the hot-melt type resin is formed onto the surface of the core particles. Next, the mixture is filtered or centrifuged in order to separate these coated particles from the system, then the obtained particles are washed with a suitable detergent and, if necessary, dried by heating, thereby obtaining the desired particulate spacers.

In the aforesaid methods of manufacture (1) and (2), the solvents suitable for dissolving the hot-melt type resin include benzene, toluene, xylene, ethylbenzene, cyclohexylbenzene, diethylbenzene, styrene, chlorobenzene, dichlorobenzene, trichlorobenzene, chlorotoluene, chloronaphthalene, pentanone, hexanone, cyclohexanone, heptanone, isophorone, acetophenone, etc. Benzene, toluene and xylene are particularly suitable as solvents for this purpose.

Precipitants appropriate for use in the above-described process include methanol, ethanol, isopropanol, methyl ethyl ketone, ethyl acetate, tetrahydrofuran, etc. Methanol, ethanol and isopropanol are particularly suitable as precipitants for this purpose. Also, after the formation of hot-melt type resin layers on the surfaces of the particles, crosslinking may, if necessary, be induced by a method such as irradiation or post-heating, etc.

### [Adhesive resin layer made of epoxy resins]

Epoxy resin layers melt and display adhesive properties when heated to a specific high temperature. The thickness of this epoxy resin layer formed on the surfaces of the core particles should desirably be in the range of 0.01 µm to 100 µm.

In general, the epoxy resin composition consisting of an epoxy resin and a hardener is used for producing the adhesive resin layer. The types of epoxy resins applicable to the purpose of the present invention include bisphenol A type epoxy resin (shown in formula I), which is obtained by the reaction between bisphenol A and epichlorohydrin, bisphenol F type epoxy resin (shown in formula II), which is obtained by the reaction between bisphenol F and epichlorohydrin, bisphenol AD type epoxy resin (shown in formula III), which is obtained by the reaction between bisphenol AD and epichlorohydrin, the epoxy resins shown in formula IV through VII obtained by the reaction between bisphenol compounds and epichlorohydrin, phenol-novolak type epoxy resins (shown in formula VIII) and cresol-novolak type epoxy resins (shown in formula IX), etc.

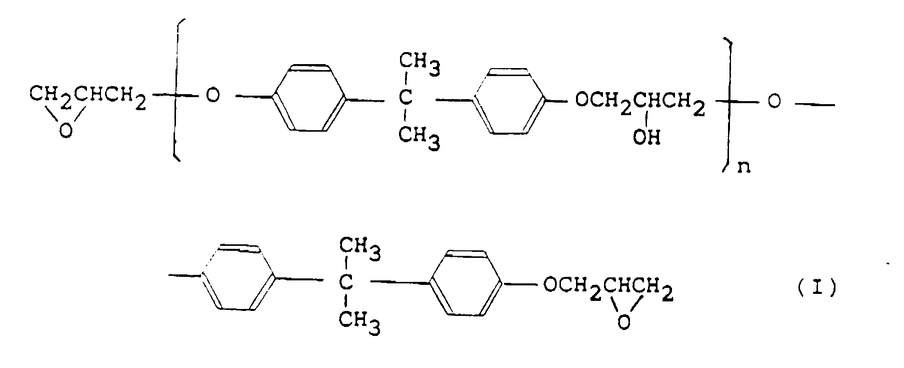

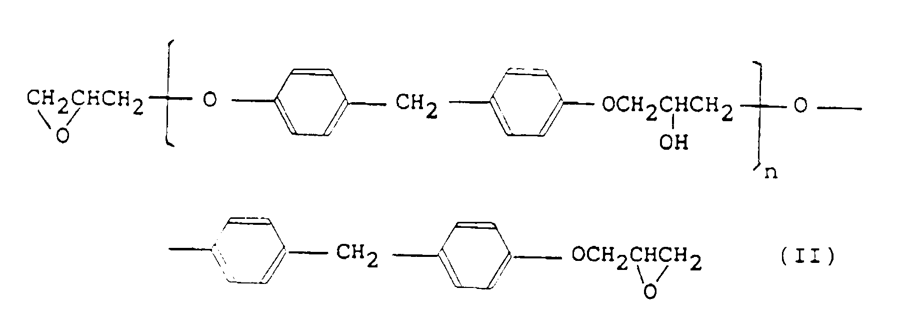

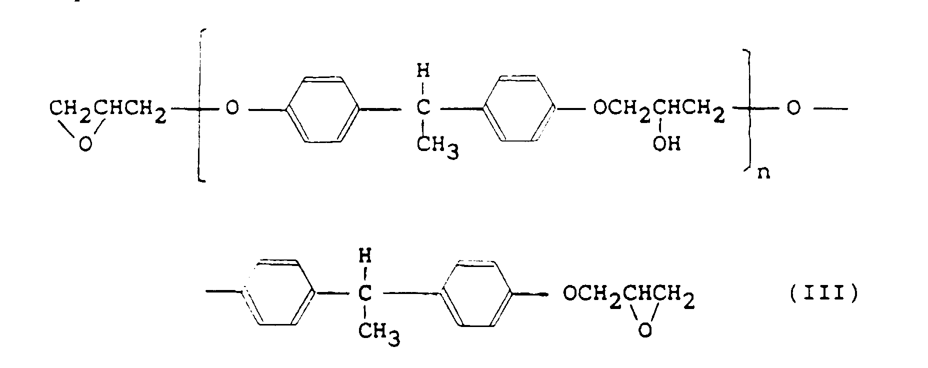

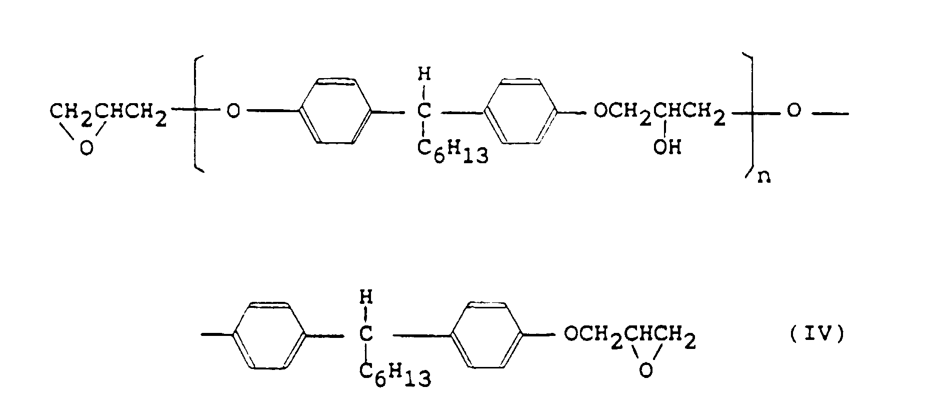

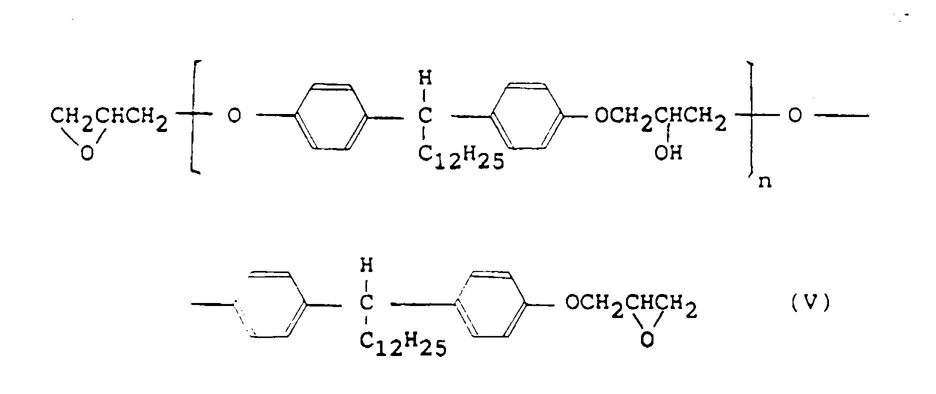

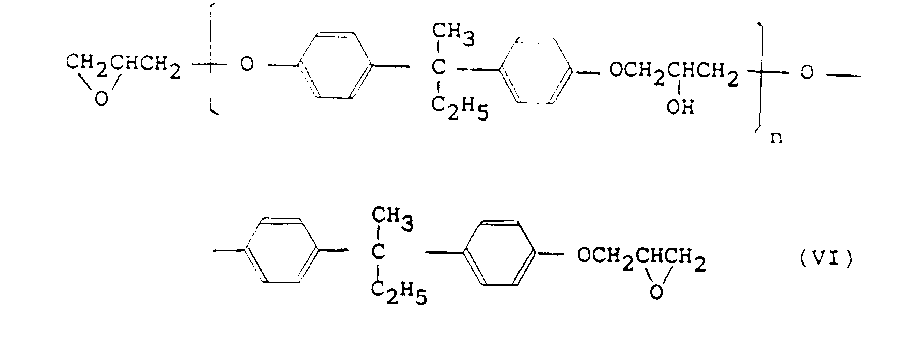

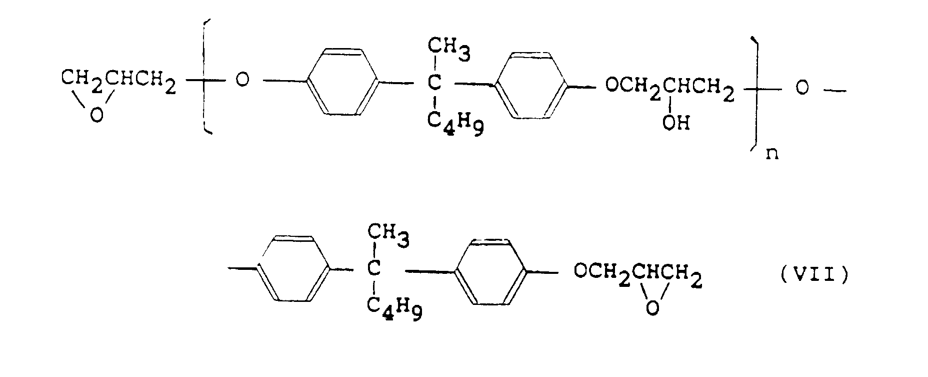

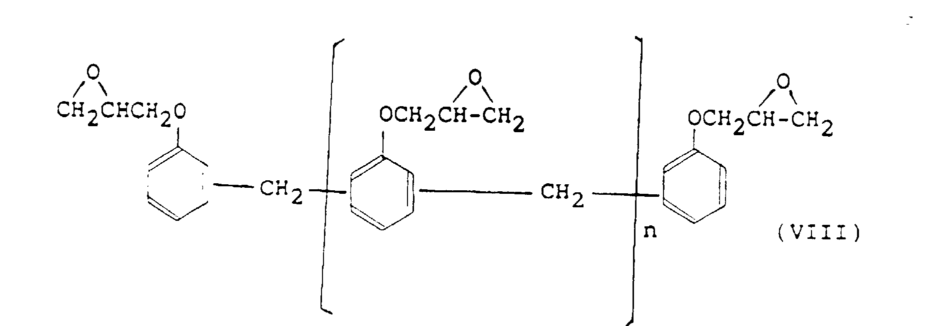

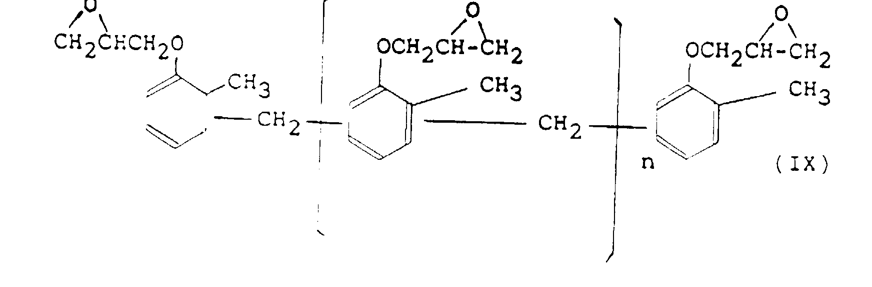

In the above formulae (I)-(IX), the value of n is ordinarily 0 - 50, and preferably 1 - 6. If the value of n is 7 or greater, then the viscosity of the resin when heated and fused becomes extremely high. Consequently when the particulate spacers so obtained are, for example, placed on glass plates and heated, the adhesive resin layer does not liquefy and does not flow down easily, and therefore the desired adhesion to the glass is difficult to realize. On the other hand, if the value of n is zero, then the resin assumes a liquid form at room temperature, the viscosity of the resin when heated is unduly low, and consequently the adhesive resin layer of the particulate spacers is tacky and/or spreads over an unduly large area on the glass.

The epoxy resins shown in the above formulae (I)-(IX) may either be used singly or several of these may be mixed and used in combination. Among the epoxy resins shown in formulae (I)-(IX), those especially suitable for the present purpose are bisphenol A type epoxy resin shown in formula (I), phenol-novolak type epoxy resin shown in formula (VIII) and cresol-novolak type epoxy resin shown in formula (IX).

The hardeners appropriate for use with the aforesaid epoxy resins for the purposes of the present invention include the following.
(1) Amine type hardeners
   Aliphatic amine compounds such as ethylenediamine, diethylenetriamine, triethylenetetramine, tetraethylenepentamine, menthenediamine, isophoronediamine, bis(4-amino-3-methylcyclohexyl)methane, and the like; aromatic amines such as methaphenylenediamine, methylenedianiline, benzyldimethylamine, 2-(dimethylaminomethylphenol), and the like.
(2) Polyaminoamide type hardeners
   Condensation products of organic carboxylic acids and polyethyleneamines such as ethylenediamine, diethylenetriamine, triethylenetetramine, tetraethylenepentamine and pentaethylenetetramine, and the like. The organic carboxylic acids which can appropriately be used in such condensation compounds include polymerized fatty acids obtained by heat treatment of unsaturated fatty acids such as linoleic acid and linolenic acid, epoxidized unsaturated fatty acids, alkenyl succinic acid, amino acids, etc.
(3) Acid anhydride type hardeners
   Dodecenyl succinic anhydride, polyadipic anhydride, phthalic anhydride, methylhexahydrophthalic anhydride, trimellitic anhydride, pyromellitic anhydride, etc.
(4) Basic active hydrogen type hardeners
   Dicyandiamide, adipic dihydrazide, eicosandioic dihydrazide, 7,11-octadecadiene-1,18-dicarbohydrazide, 1,3-bis(hydrazinocarboethyl)-5-isopropylhydantoin, etc.
(5) Imidazole type hardeners
   2-methylimidazole, 2-ethyl-4-methylimidazole, 2-n-alkylimidazoles, 2-phenylimidazole, 2-phenyl-2-methylimidazole, 2-ethylimidazole, 1-cyanoethyl-2-methylimidazole, 1-cyanoethyl-2-ethyl-4-methylimidazole, 2,4-diamino-6-(2'-methylimidazolyl)ethyl-1,3,5-triazine, 2-4-diamino-6-(2'-ethyl-4'-methylimidazolyl)ethyl-1,3,5-triazine, 2,4-diamino-6-(2'-n-undecylimidazolyl)ethyl-1,3,5-triazine, 2-phenylimidazol-4,5-di-yl-dimethanol, (5-methyl-2-phenyl-4-imidazolyl)methanol, etc.
(6) Tertiary amine type hardeners
   Tris(dimethylaminomethyl)phenol, dimethylbenzylamine, 1,8-diazabicyclo(5,4,0)undecane, etc.
(7) Other types of hardeners
   Salts of Lewis or Brφnsted acids, such as monoethylamine salt of boron trifluoride, piperidine salt of boron trifluoride, monoethylamine salt of trifluoromethanesulfonic acid, diphenyliodonium salt of hexafluoroarsenic acid, etc.

The hardeners listed in categories (1)-(7) above can be used either by direct mixing with the aforesaid epoxy resins or in microcapsulated form. These hardeners cause a hardening reaction when mixed with an epoxy resin and heated to a specified temperature. The temperature at which hardening (i.e., curing) occurs varies according to the type of hardener used, but is ordinarily in the range of 50°C to 250°C. The preferred hardening temperature for the present purpose is in the range of 90°C and 200°C.

The hardener can be used in an amount of 0.5 - 100 parts by weight for every 100 parts by weight of the epoxy resin, and an amount of hardener in the range of 5 - 50 parts by weight for every 100 parts by weight of the epoxy resin is particularly desirable.

Among the above-mentioned hardeners, those which are particularly suitable for use in the process of the present invention are those in categories (4) (i.e., basic active hydrogen type hardeners) and (5) (i.e., imidazole type hardeners). When these types of hardeners are mixed with epoxy resins, no hardening reaction occurs at ordinary temperatures, and therefore the pot life of the epoxy resin composition so obtained is long, moreover, the composition can be stored for comparatively long periods of time, but will harden rapidly when heated above a specified temperature.

All of the aforesaid hardeners are of the heat-hardening type. However, the following ultraviolet-hardening types can also be used for the purposes of the present invention.
(a) Aromatic diazonium salts

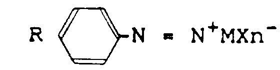

   MXn⁻:BF₄⁻, PF₆⁻,

   AsF₆⁻,SbF₆⁻
(b) Aromatic sulfonium salts

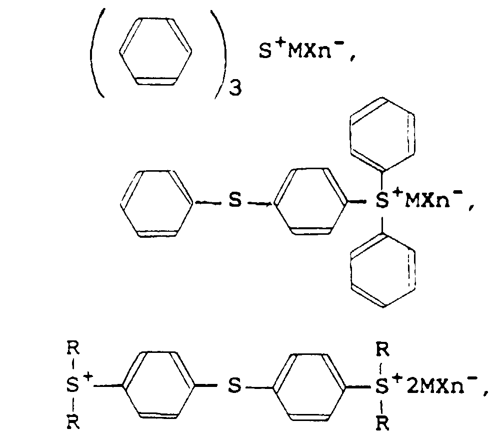

   MXn⁻:BF₄⁻, PF₆⁻,

   AsF₆⁻, SbF₆⁻
(c) Aromatic iodonium salts

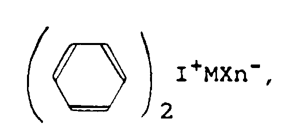

   MXn⁻:BF₄⁻,PF₆⁻,

   AsF₆⁻, SbF₆⁻

These ultraviolet-hardening types of hardeners should desirably be used in an amount of 0.1-10 parts by weight for every 100 parts by weight of the epoxy resin.

The method used for coating core particles with epoxy resin composition is as follows.

First, the epoxy resin is dissolved in a solvent such as acetone, tetrahydrofuran, methyl ethyl ketone, benzene, toluene, etc., then the core particles and hardener are mixed into the solution so obtained and thoroughly dispersed. The amount of the solvent used is arbitrary, but the concentration of the epoxy resin in the solution should desirably be in the range of 3% by weight to 30% by weight. Next, while the mixture is being stirred, the solvent is evaporated by applying reduced pressure or another suitable method, causing the deposition of the epoxy resin composition onto the surfaces of the core particles, thereby forming the required epoxy resin layer. Mutual cohesion or aggregation of particles, which is prone to occur during the evaporation of the solvent, can be prevented by adding a small amount of surfactant or precipitant to the solution. The precipitant is a liquid which is miscible with the solvent, and the epoxy resin cannot be soluble thereinto. Water is particularly effective as a precipitant of this kind. Core particles with a titanium oxide polymer layer can also be used in the above-mentioned process for forming the epoxy resin layer.

The adhesive resin layer made of a hot-melt type resin or epoxy resin manifest adhesive properties when heated at a specified temperature. Therefore, when particulate spacers having the adhesive resin layer formed thereon are interposed between two substrate plates and heated, the adhesive resin layer melts and thus the particulate spacers adhere to the substrates. Hence, if the particulate spacers of the present invention are used, for example, as spacers for liquid crystal display cells, the particles are not displaced from the points of adhesion to the substrates, and consequently a fixed distance can be maintained between the substrates.

### [Liquid Crystal Display Cells]

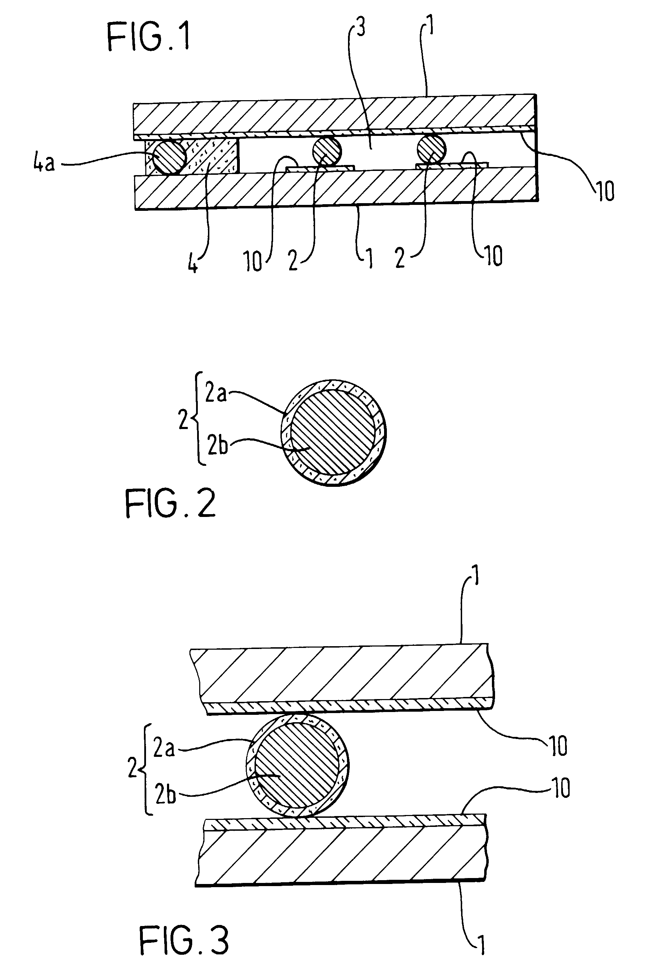

Figure 1 is a cross-sectional view showing the main portions of the liquid crystal display cell of the present invention.

The liquid crystal display cell comprises a pair of substrates 1 with electrodes, having an electrode surface 10 disposed on the inner surface of a transparent panel made of a glass plate or the like; a sealing material 4 filling the peripheral portion of the gap space between the substrates 1; particulate spacers 2 dispersed in the gap between the substrates 1 to maintain a constant gap between the substrates; and a liquid crystal composition 3 filling the gap between the substrates 1.

The particulate spacer 2 has a core particle 2b and an adhesive resin layer 2a formed thereon.

The sealing material 4 is composed of an epoxy resin, ultraviolet-curable resin, or other appropriate substance, with colorless or colored particles 4a as spacers.

An example of a method for producing the aforesaid liquid crystal display cell is described below.

First, particulate spacers 2 are almost uniformly dispersed upon a first substrate 1, next, the particulate spacers are pressed onto the substrate with a pressure plate having no adhesiveness to these particulate spacers, while simultaneously applying heat, which results in the adhesion of the spacers to the substrate, when the adhesive resin layer is made of a hot-melt type resin or epoxy resin. The pressure plate is composed of a material which does not adhere to the particulate spacers. For example, sheets composed of polytetrafluoroethylene, steel or glass plates with surface coatings of polytetrafluoroethylene, may be appropriately used for this purpose.

After securing the adhesion of the particulate spacers to the substrate, the pressure plate is removed. Next, a second substrate is placed on the first substrate, a liquid crystal material being filled therebetween. After that, a sealing material is applied onto the peripheral portion of the substrate. Then, pressure is applied to the first and second substrates while applying heat to the peripheral portion of the substrates for the purpose of curing the sealing material, thereby obtaining the liquid crystal display cell.

When particulate spacers having an adhesive resin layer made of a hot-melt type resin or epoxy resin are used, the liquid crystal display cell so formed has a construction in which the particulate spacers are in contact with the inner surface of one substrate. Hence, even if the liquid crystal display cell is subjected to bending or vibration, the spacers will not be detached from the inner face of the first substrate. Accordingly, liquid crystal display cells in which a constant gap between the pair of substrates is maintained are obtained.

### Examples

The following materials were used in the examples described below.
(A) Core particles
   (1) Silica particles: SEAHOSTAR KE-P100, manufactured by Nippon Shokubai Kagaku Kogyo Co., Ltd.
   (2) Melamine resin particles: UNIVEKS WA, manufactured by Unitika, Ltd.
   (3) Divinylbenzene type polymer
(B) Titanate compounds
   (1) Tetrapropoxytitanium: Trade name A-1, manufactured by Nippon Soda Co., Ltd.
   (2) Tetrabutoxytitanium: Trade name B-1, manufactured by Nippon Soda Co., Ltd.
   (3) Tetrakis(2-ethylhexoxy)titanium: Trade name TOT, manufactured by Nippon Soda Co., Ltd.
(C) Hot-melt type adhesive resins
   (1) Waxy polyethylene: Trade name SANWAX 151-P, manufactured by Sanyo Kasei Kogyo Co., Ltd.
   (2) Carboxyl group-containing ethylene-vinyl acetate copolymer: Trade name DUMILAN C-2280, manufactured by Takeda Yakuhin Kogyo Co., Ltd.
   (3) Oxidized waxy polyethylene: Trade name SANWAX E-300, manufactured by Sanyo Kasei Kogyo Co., Ltd.
(D) Epoxy resin composition
   (D-1) Epoxy resin
      Solid epoxy with an epoxy equivalent of 480 and a softening point of 68°C: Trade name EPICOAT 1001, manufactured by Yuka Shell Epoxy, Co., Ltd.
   (D-2) Hardening agents
      (1) 2-ethyl-4-methylimidazole: Trade name CUREZOL 2E4MZ, manufactured by Shikoku Kasei Kogyo Co., Ltd.
      (2) Dicyanamide: Trade name DICY-7, manufactured by Yuka Shell Epoxy, Co., Ltd.
      (3) 2-phenylimidazole-4,5-diyldimethanol: Trade name 2PHZ, manufactured by Shikoku Kasei Kogyo Co., Ltd.
      (4) 1-cyanoethyl-2-ethyl-4-methylimidazole: Trade name 2E4MZ-CN, manufactured by Shikoku Kasei Kogyo Co., Ltd.
(E) Dyes
   (1) Basic dye CATIRON BLACK SBH: manufactured by Hodogaya Kagaku Co., Ltd.
   (2) Basic dye CATIRON BRILLIANT SCARLET CD-GLH: manufactured by Hodogaya Kagaku Co., Ltd.

The methods used for measurement of physical properties of core particles were as follows.
(A) Measurement of mean particle size
   This was performed with a Coulter Counter Model ZB/C-1000 particle size measuring apparatus.
(B) Observation of particle surfaces
   The surfaces of the core particles were observed with a scanning electron microscope.
(C) Test for dispersibility of particulate spacers
   The particulate spacers were suspended in Freon-113 to obtain a spray solution, which was sprayed onto a glass plate with a nozzle, then the state of dispersion of the particulate spacers on the glass plate was observed.
(D) Test for adhesion of particulate spacers to glass plate
   The glass plates upon which particulate spacers were dispersed, as obtained in the aforesaid dispersibility tests (C), were left for 10 minutes in a heating furnace at a specified temperature. Next, the sites of adhesion of the particulate spacers to the glass plate were observed with a 200 x magnifying glass or an electron microscope.
   In cases where the adhesive resin layer had been formed with waxy polyethylene, the temperature of the heating furnace was set to 110°C.
   In cases where the adhesive resin layer had been formed with carboxyl group-containing ethylene-vinyl acetate copolymer, the temperature of the heating furnace was set to 120°C.
   In cases where the adhesive resin layer had been formed with epoxy resin, the temperature of the heating furnace was set to 150°C.
(E) Rate of retention (retention ratio) of particulate spacers
   Adhesive tape was fastened to the surface of a glass plate with adhering particulate spacers obtained as described in item (D) above (i.e., to the surface upon which the particulate spacers had adhered), and then the tape was detached. This operation was performed three times. The number of particulate spacers on the glass plate surface before the adhesive tape was applied as well as the number of particulate spacers remaining on the surface after the application and detachment of the adhesive tape in the above manner were counted, and the ratio of the number of particulate spacers on the glass plate surface after the application and removal of the tape to the number of particulate spacers on the glass plate surface prior to the application of the tape was calculated.

### Example 1

First, 10 g of colored resin particles with a mean particle size of 9.90 µm (standard deviation 0.36 µm), consisting of a divinylbenzene polymer, was added to a solution prepared by dissolving 0.15 g of tetrapropoxytitanium in 15 ml of n-hexane, and the ingredients were well mixed with a spatula, after which the n-hexane was evaporated. Next, this mixture was thoroughly ground in a mortar, eliminating the lumps.

Next, 2 g of epoxy resin (EPICOAT 1001) was dissolved in 40 ml of acetone, and to this solution was added 6 ml of water, 10 g of the aforesaid resin particles, and as a hardening agent, 0.4 g of 2-ethyl-4-methylimidazole. After thorough mixing, the acetone was evaporated, while stirring. Then, the dried material was crushed in a mortar and the lumps were completely demolished.

The mean particle size of the particulate spacers so obtained was 10.32 µm (standard deviation 0.46 µm). From this result, the mean thickness of the adhesive epoxy resin layer was calculated to be 0.21 µm. Examination of the surfaces of these particulate spacers revealed that the colored particles had indeed been uniformly coated with epoxy resin.

The dispersibility of these particulate spacers was tested, and the results showed that the particulate spacers could be well dispersed in the form of single particles on glass plates. Also, tests of the adhesion of the particulate spacers to the glass plate indicated that fused resin material was present between the glass plate and the particulate spacers. Furthermore, the retention ratio of the colored particulate spacers was 0.95.

### Example 2

First, 10 g of colored inorganic particles with a mean particle size of 7.30 µm (standard deviation 0.32 µm), composed of borosilicate glass, was added to a solution prepared by dissolving 0.35 g of tetrakis(2-ethylhexoxy)titanium in 15 ml of n-hexane, and the ingredients were well mixed with a spatula, after which the n-hexane was evaporated.

Next, this mixture was thoroughly ground in a mortar, eliminating the lumps.

Then, 0.2 g of dicyandiamide and 0.2 g of 2-phenylimidazole-4,5-diyldimethanol were used as hardening agents.

Except for the use of the aforesaid materials, particulate spacers were then prepared by the same procedure as that used in Example 1.

The mean particle size of the particulate spacers so obtained was 7.76 µm (standard deviation 0.35 µm). The mean thickness of the epoxy resin adhesive layer was 0.23 µm. The dispersibility of these particulate spacers was tested, and the results showed that the particulate spacers could be well dispersed in the form of single particles on glass plates. Also, tests of the adhesion of the particulate spacers to the glass plate indicated that fused resin material was present between the glass plate and the colored particulate spacers. Furthermore, the retention ratio of the particulate spacers was 0.90.

### Example 3

First, 10 g of short glass fibers with a mean diameter of 9.05 µm and a mean length of 45.3 µm, composed of borosilicate glass, was added to a solution prepared by dissolving 0.3 g of tetrakis(2-ethylhexoxy)titanium in 15 ml of n-hexane, and the ingredients were well mixed with a spatula, after which the n-hexane was evaporated. Next, this mixture was thoroughly ground in a mortar, eliminating the lumps.

Then, 0.4 g of 1-cyanoethyl-2-ethyl-4-methylimidazole was used as a hardening agent.

Particulate spacers were then obtained by the same process as that employed in Example 1 except for the above.

The mean diameter of the particulate spacers so obtained was 9.40 µm and the mean thickness of the adhesive epoxy resin layer was calculated to be 0.175 µm. The dispersibility of these particulate spacers was tested, and the results showed that the particulate spacers could be wall dispersed in the form of single particles on glass plates. Also, tests of the adhesion of the particulate spacers to the glass plate indicated that fused resin material was present between the glass plate and the colored particulate spacers. Furthermore, the retention ratio of the particulate spacers was 1.0.

### Example 4

### (A) Preparation of colored particles

First, 100 g of concentrated sulfuric acid was added to 10 g of plastic-particles 8.05 µm in size, and acid treatment was continued, while stirring for 6 hours at 55°C. On the other hand, 6 g of a basic dye (CATIRON BLACK SBH) was dissolved in 300 ml of water, and a dye bath solution was obtained by adjusting this solution to pH 4 with acetic acid. Then, the aforesaid acid-treated plastic particles were added to this dye bath solution, and dyeing treatment was performed for 6 hours at 95°C, thereby obtaining 10 g of black-colored particles. The mean particle size of these colored particles was 8.45 µm.

### (B) Preparation of particulate spacers

A waxy polyethylene solution was prepared by adding 10.0 g of waxy polyethylene (SANWAX 151-P) to 200 ml of toluene and dissolving the wax by warming in a hot water bath at 80°C.

On the other hand, a surfactant solution was prepared by dissolving 1.5 g of the surfactant (NOIGEN EA120) in 950 ml of water. The aforesaid waxy polyethylene solution was then added to this surfactant solution, and the mixture was emulsified by agitation, while maintaining the temperature at 80°C.

Next, 10 g of the colored particles obtained as described in item (A) above was added to this emulsion. After thorough suspension and dispersion, the temperature of the mixture was reduced to 45°C by cooling at the rate of 0.1°C/min. Stirring was continued throughout this procedure. This emulsion was filtered with a glass filter (G-4). The material separated was thoroughly washed with methanol and then suspended in 3 liters of a mixed ethanol/Freon-113 solution (volume ratio 2:1). The mixture was then left standing undisturbed in that state for 15 hours and the supernatant was decanted to remove minute flakes of waxy polyethylene. The remaining material was again filtered on a glass filter, then washed with Freon-113 and dried at room temperature under reduced pressure, thereby obtaining the final particulate spacers.

### (C) Measurement of physical properties of particulate spacers

The mean particle size of these particulate spacers was 8.92 µm, and the mean thickness of the waxy polyethylene layer was therefore calculated to be 0.24 µm. Examination of the surfaces of these particulate spacers revealed that the colored particles had indeed been uniformly coated with waxy polyethylene. The dispersibility of these particulate spacers was tested, and the results showed that the particulate spacers could be well dispersed in the form of single particles on glass plates. Also, tests of the adhesion of the particulate spacers to the glass plate indicated that fused resin material was present between the glass plate and the colored particulate spacers.

### Example 5

### (A) Preparation of colored resin particles

Here, 10 g of blue-colored resin particles were obtained by dyeing silica particles with mean particle size 1.15 µm (SEAHOSTAR KE-P100) with a basic dye.

### (B) Preparation of particulate spacers

First, 10 g of the aforesaid colored particles were added to a solution prepared by adding 9.0 g of a carboxyl group-containing ethylene-vinyl acetate copolymer (DUMILAN C-2280) to 600 ml of toluene and warming in a hot water bath at 60°C. After thorough dispersion and suspension of the resin particles, ethanol was added dropwise to the mixture at the rate of 0.5 ml/min. until a total of 350 ml of ethanol had been added thereto. Then, the mixture was cooled to room temperature, filtered on a glass filter (G-4) and washed with ethanol. Next, the material separated was suspended in 2.5 liters of a mixed ethanol/Freon-113 solution (volume ratio 2:1). The mixture was then left standing undisturbed in this state for 15 hours, and the supernatant was decanted to remove suspended fragments of the carboxyl group-containing ethylene-vinyl acetate copolymer. The remaining material was again filtered on a glass filter, then washed with Freon-113, and vacuum-dried at room temperature, thereby obtaining the final particulate spacers. The mean particle size of these particulate spacers was 1.27 µm, and the mean thickness of the hot-melt type adhesive resin layer was calculated to be 0.06 µm. Examination of the particulate spacers revealed that a uniform layer of hot-melt type resin had been formed on the surfaces of the colored particles.

### (C) Measurement of physical properties of particulate spacers

The dispersibility of these particulate spacers was tested, and the results showed that the particulate spacers could be well dispersed in the form of single particles on glass plates. Also, tests of the adhesion of the particulate spacers to the glass plate indicated that fused resin material was present between the glass plate and the colored particulate spacers.

### Example 6

### (A) Preparation of colored resin particles

Here, 10 g of red-colored resin particles was obtained by dyeing melamine resin particles 20.27 µm in size (UNIVEKS WA, manufactured by Unitika, Ltd.) with an acid dye.

### (B) Preparation of particulate spacers

First, 10.5 g of oxidized waxy polyethylene (SANWAX E-300) was added to 150 ml of toluene and dissolved by warming in a hot water bath at 80°C. On the other hand, a surfactant solution was prepared by dissolving 1.5 g of the surfactant (NOIGEN EA120) in 1 liter of water. The aforesaid oxidized waxy polyethylene solution was then added to this surfactant solution, and the mixture was emulsified by agitation, while maintaining the temperature at 80°C.

Next, 10 g of the aforesaid colored resin particles were added to this emulsion. While vigorously dispersing and suspending the resin particles, the temperature of the mixture was reduced to 45°C by cooling at the rate of 0.2°C/min., after which 700 ml of ethanol was added thereto. Then, this emulsion was filtered with a glass filter (G-4) and thoroughly washed with methanol, after which separation and purification were performed in the same manner as described in Example 4.

### (C) Measurement of physical properties of particulate spacers

The mean particle size of these particulate spacers so obtained was 21.27 µm, and the mean thickness of the hot-melt type adhesive resin layer was calculated to be 0.50 µm. Examination of the surfaces of these particulate spacers revealed that the colored resin particles had indeed been uniformly coated with hot-melt type adhesive resin. The dispersibility of these particulate spacers was tested, and the results showed that the particulate spacers could be well dispersed in the form of single particles on glass plates. Also, tests of the adhesion of the particulate spacers to the glass plate indicated that fused resin material was present between the glass plate and the particulate spacers. Furthermore the retention ratio of the particulate spacers was 1.0.

### Example 7

### (A) Preparation of colored resin particles having a titanium oxide polymer intermediate layer on the surface thereof

First, 10 g of colored resin particles prepared by the same procedure as that described in Example 4 were added to a solution prepared by dissolving 0.15 g of tetrapropoxytitanium (A-1) in 15 ml of n-hexane, and the ingredients were well mixed with a spatula, after which the n-hexane was evaporated. Next, this mixture was thoroughly ground in a mortar, eliminating the lumps. The mean particle size of the colored resin particles so coated with titanium oxide polymer was 8.84 µm.

### (B) Preparation of particulate spacers

A waxy polyethylene solution was prepared by adding 2.6 g of waxy polyethylene (SANWAX 151-P) to 50 ml of toluene and dissolving the waxy polyethylene by warming in a hot water bath at 80°C.

On the other hand, a surfactant solution was prepared by dissolving 0.5 g of the surfactant (NOIGEN EA120) in 300 ml of water. The aforesaid solution of waxy polyethylene was then added to this surfactant solution, and the mixture was emulsified by agitation, while maintaining the temperature at 80°C.

Next, 10 g of the colored resin particles coated with titanium oxide polymer, which had been obtained as described in item (A) above, were added to this emulsion. After thorough suspension and dispersion, the temperature of the mixture was reduced to 45°C by cooling at the rate of 0.1°C/min. Stirring was continued throughout this procedure. This emulsion was filtered with a gloss filter (G-4). The material separated was thoroughly washed with methanol and then suspended in 1 liter of a mixed ethanol/Freon-113 solution (volume ratio 2:1). The mixture was then left standing undisturbed in that state for 15 hours and the supernatant was decanted to remove minute flakes of waxy polyethylene. The remaining material was again filtered on a glass filter, then washed with Freon-113 and dried at room temperature under reduced pressure, thereby obtaining the final particulate spacers.

### (C) Measurement of physical properties of particulate spacers

The mean particle size of these particulate spacers wad 8.97 µm, and the mean thickness of the waxy polyethylene layer was therefore calculated to be 0.07 µm. Examination of the surface of these particulate spacers revealed that the colored resin particles having a titanium oxide polymer intermediate layer on the surface thereof had indeed been uniformly coated with waxy polyethylene.

The dispersibility of these particulate spacers was tested, the results showed that the particulate spacers could be well dispersed in the form of single particles on glass plates. Also, tests of the adhesion of the particulate spacers to the glass plate indicated that fused resin material was present between the glass plate and the colored resin particles having a titanium oxide polymer intermediate layer on the surface thereof. Furthermore, the retention ratio of the particulate spacers was 1.0.

### Example 8

### (A) Preparation of colored particles having a titanium oxide polymer intermediate layer on the surface thereof

First, 10 g of blue-colored particles prepared by the same procedure as that described in Example 5 were added to a solution prepared by dissolving 0.35 g of tetrabutoxytitanium (B-1) in 15 ml of n-hexane, and the ingredients were well mixed with a spatula, after which the n-hexane was evaporated. Next, this mixture was thoroughly ground in a mortar, eliminating the lumps.

### (B) Preparation of particulate spacers

First, 2.9 g of a carboxyl group-containing ethylene-vinyl acetate copolymer (DUMILAN C-2280) were added to 200 ml of toluene and dissolved by warming in a hot water bath at 60°C. Then, 10 g of the aforesaid colored resin particles coated with titanium oxide polymer were added to this solution. After thorough dispersion and suspension, ethanol was added dropwise to the mixture at the rate of 0.5 ml/min., and this procedure was continued until 120 ml of ethanol had been added thereto. Then, after cooling down to room temperature, the mixture was filtered with a glass filter (G-4). The material separated was then washed with ethanol and suspended in 1 liter of a mixed ethanol/Freon-113 solution (volume ratio 2:1). The mixture was then left standing undisturbed in this state for 15 hours, and the supernatant was decanted to remove suspended fragments of carboxyl group-containing ethylene-vinyl acetate copolymer. The remaining material was again filtered on a glass filter, then washed with Freon-113, and dried at room temperature under reduced pressure, thereby obtaining the final particulate spacers. The mean particle size of these particulate spacers was 1.29 µm, and the mean thickness of the hot-melt type adhesive resin layer was calculated to be 0.07 µm. Examination of the surfaces of the particulate spacers revealed that a uniform layer of hot-melt type adhesive resin had been formed on the surfaces of the particulate spacers.

### (C) Measurement of physical properties of particulate spacers

The dispersibility of these particulate spacers was tasted, and the results showed that the particulate spacers could be well dispersed in the form of single particles on glass plates. Also, tests of the adhesion of the particulate spacers to the glass plate indicated that fused resin material was present between the glass plate and the colored particles having a titanium oxide polymer intermediate layer.

### Example 9

### (A) Preparation of colored resin particles

First, 10 g of red-colored resin particles obtained by the same process as that used in Example 6 were added to a solution prepared by dissolving 0.3 g of tetrakis(2-ethylhexoxy)titanium in 15 ml of n-hexane, and the ingredients were well mixed with a spatula, after which the n-hexane was evaporated. Next, this mixture was thoroughly ground in a mortar, eliminating the lumps.

### (B) Preparation of particulate spacers

First, 10.5 g of oxidized waxy polyethylene (SANWAX E-300) were added to 150 ml of toluene and dissolved by warming in a hot water bath at 80°C. On the other hand, a surfactant solution was prepared by dissolving 1.5 g of the surfactant (NOIGEN EA120) in 1 liter of water. The aforesaid oxidized waxy polyethylene solution was then added to this surfactant solution, and the mixture was emulsified by agitation, while maintaining the temperature at 80°C.

Next, 10 g of the aforesaid colored resin particles were added to this emulsion. while vigorously dispersing and suspending the resin particles, the temperature of the mixture was reduced to 45°C by cooling at the rate of 0.2°C/min., after which 700 ml of ethanol were added thereto. Then, this suspension was filtered with a glass filter (G-4) and thoroughly washed with methanol, after which separation and purification were performed in the same manner as described in Example 4.

### (C) Measurement of physical properties of particulate spacers

The mean particle size of the particulate spacers so obtained was 21.30 µm, and the mean thickness of the hot-melt type resin layer was calculated to be 0.52 µm. Examination of the surfaces of these particulate spacers revealed that the colored resin particles had indeed been uniformly coated with hot-melt type adhesive resin.

The dispersibility of these particulate spacers was tested, and the results showed that the particulate spacers could be well dispersed in the form of single particles on glass plates. Also, tests of the adhesion of the particulate spacers to the glass plate indicated that fused resin material was present between the glass plate and the colored resin particles.

### Example 10

### (A) Preparation of colored resin particles

Here, 10 g of black-colored resin particles were obtained in accordance with the procedure as described in item (A) of Example 4. The mean particle size of these colored resin particles was 8.45 µm.

### (B) Preparation of particulate spacers

First, 2 g of solid epoxy (EPICOAT 1001) with epoxy equivalent 480 and softening point 68°C were dissolved in 40 ml of acetone, after which 6 ml of water, 10 g of the aforesaid colored resin particles and 0.4 g of 2-ethyl-4-methylimidazole (CUREZOL 2E4MZ) as a hardening agent were added thereto. After thorough mixing, the acetone was evaporated by stirring. Next, the dry material so obtained was thoroughly crushed in a mortar, completely demolishing the lumps.

The mean particle size of the particulate spacers so obtained was 8.85 µm. From this result, the mean thickness of the epoxy resin layer was calculated to be 0.20 µm. Examination of the surfaces of these particulate spacers revealed that a uniform layer of epoxy resin had been formed on the colored resin particles.

### (C) Measurement of physical properties of particulate spacers

The dispersibility of these particulate spacers was tested, and the results showed that the particulate spacers could be well dispersed in the form of single particles on glass plates. Also, tests of the adhesion of the particulate spacers to the glass plate indicated that fused resin material was present between the glass plate and the colored resin particles. The retention rate of the particulate spacers was 0.95.

### Example 11

### (A) Preparation of colored particles

Here, 10 g of blue-colored particles were obtained in accordance with the procedure as described in item (A) of Example 5.

### (B) Preparation of particulate spacers

First, 0.2 g of dicyandiamide (DICY-7) and 0.2 g of 2-phenylimidazole-4,5-diyldimethanol (2PHZ) were used as hardening agents.

Particulate spacers were obtained by the same procedure as that employed in Example 10, except for the use of the aforesaid materials. The mean particle size of these particulate spacers was 1.35 µm, while the mean thickness of the epoxy resin layer was calculated to be 0.10 µm. Examination of the surfaces of these particulate spacers revealed that a uniform layer of epoxy resin had been formed on the colored particles.

### (C) Measurement of physical properties of particulate spacers

The dispersibility of these particulate spacers was tested, and the results showed that the particulate spacers could be well dispersed in the form of single particles on glass plates. Also, tests of the adhesion of the particulate spacers to the glass plate indicated that fused resin material was present between the glass plate and the colored resin particles. The retention rate of the particulate spacers was 0.95.

### Example 12

### (A) Preparation of colored resin particles

Here, 10 g of red-colored particles were obtained in accordance with the procedure as described in item (A) of Example 6.

### (B) Preparation of particulate spacers

First, 0.4 g of 1-cyanoethyl-2-ethyl-4-methylimidazole (2E4MZ-CN) were used as a hardening agent.

Particulate spacers were obtained by the same procedure as that employed in Example 10, except for the use of the aforesaid materials. The mean particle size of these particulate spacers was 20.93 µm, while the mean thickness of the epoxy resin layer was calculated to be 0.33 µm. Examination of the surfaces of these particulate spacers revealed that a uniform layer of epoxy resin had been formed on the colored resin particles.

### (C) Measurement of physical properties of particulate spacers

The dispersibility of these particulate spacers was tested, and the results showed that the particulate spacers could be well dispersed in the form of single particles on glass plates. Also, tests of the adhesion of the particulate spacers to the glass plate indicated that fused resin material was present between the glass plate and the colored resin particles. The retention rate of the particulate spacers was 1.0.

### Example 13

### (A) Preparation of colored resin particles having a titanium oxide polymer intermediate layer on the surface thereof

First, 10 g of colored resin particles obtained by the same process as that used in Example 10 were added to a solution prepared by dissolving 0.15 g of tetrapropoxytitanium (A-1) in 15 ml of n-hexane, and the ingredients were well mixed with a spatula, after which the n-hexane was evaporated. Next, this mixture was thoroughly ground in a mortar, eliminating the lumps.

### (B) Preparation of particulate spacers

First, 2 g of solid epoxy (EPICOAT 1001) with epoxy equivalent 480 and softening point 68°C was dissolved in 40 ml of acetone, after which 6 ml of water, 10 g of the aforesaid colored resin particles coated with titanium oxide polymer and 0.4 g of 2-ethyl-4-methylimidazole (CUREZOL 2E4MZ) as a hardening agent were added thereto. After thorough mixing, the acetone was evaporated while stirring. Next, the dry material so obtained was thoroughly crushed in a mortar, completely demolishing the lumps.

The mean particle size of the particulate spacers so obtained was 8.84 µm, and the mean thickness of the epoxy resin layer was calculated to be 0.20 µm. Examination of the surfaces of these particulate spacers revealed that a uniform layer of epoxy resin had been formed on the colored resin particles having a titanium oxide polymer intermediate layer on the surface thereof.

### (C) Measurement of physical properties of particulate spacers

The dispersibility of these particulate spacers was tested, and the results showed that the particulate spacers could be well dispersed in the form of single particles on glass plates. Also, tests of the adhesion of the particulate spacers to the glass plate indicated that fused resin material was present between the glass plate and the colored resin particles having a titanium oxide polymer intermediate layer on the surface thereof. The retention rate of the particulate spacers was 1.0.

### Example 14

### (A) Preparation of colored particles having a titanium oxide polymer intermediate layer on the surface thereof

First, 10 g of blue-colored particles obtained by the same process as that used in Example 11 were added to a solution prepared by dissolving 0.35 g of tetrabutoxytitanium (B-1) in 15 ml of n-hexane, and the ingredients were well mixed with a spatula, after which the n-hexane was evaporated. Next, this mixture was thoroughly ground in a mortar, eliminating the lumps.

### (B) Preparation of particulate spacers

On the other hand, 2 g of solid epoxy (EPICOAT 1001) with epoxy equivalent 480 and softening point 68°C was dissolved in 40 ml of acetone, after which 6 ml of water, 10 g of the aforesaid colored particles coated with titanium oxide polymer, and as hardening agents, 0.2 g of dicyanamide (DICY-7) plus 0.2 g of 2-phenylimidazole-4,5-di-yl-dimethanol (2PHZ) were added to the solution. After thorough mixing, the acetone was evaporated while stirring. Next, the dry material so obtained was thoroughly crushed in a mortar, completely demolishing the lumps and obtaining the final particulate spacers.

The mean particle size of the particulate spacers was 1.32 µm, and the mean thickness of the epoxy resin layer was calculated to be 0.09 µm. Examination of the surfaces of these particulate spacers revealed that a uniform layer of epoxy resin had been formed on the colored particles having a titanium oxide polymer intermediate layer on the surface thereof.

### (C) Measurement of physical properties of particulate spacers

The dispersibility of these particulate spacers was tested, and the results showed that the particulate spacers could be well dispersed in the form of single particles on glass plates. Also, tests of the adhesion of the particulate spacers to the glass plate indicated that fused resin material was present between the glass plate and the colored resin particles having a titanium oxide polymer intermediate layer on the surface thereof. The retention rate of the particulate spacers was 0.95.

### Example 15

### (A) Preparation of colored resin particles having a titanium oxide polymer intermediate layer on the surface thereof

First, 10 g of red-colored particles obtained by the same process as that used in Example 12 were added to a solution prepared by dissolving 0.3 g of tetrakis(2-ethylhexoxy)titanium (TOT) in 15 ml of n-hexane, and the ingredients were well mixed with a spatula, after which the n-hexane was evaporated. Next, this mixture was thoroughly ground in a mortar, eliminating the lumps.

### (B) Preparation of particulate spacers

Here, 0.4 g of 1-cyanoethyl-2-ethyl-4-methylimidazole (2E4MZ-CN) were used as a hardening agent.

Particulate spacers were obtained by the same procedure as that employed in Example 4, except for the use of the aforesaid materials. The mean particle size of these particulate spacers was 20.77 µm, while the mean thickness of the epoxy resin layer was calculated to be 0.25 µm. Examination of the surfaces of these particulate spacers revealed that a uniform layer of epoxy resin had been formed on the colored resin particles having a titanium oxide polymer intermediate layer on the surface thereof.

### (C) Measurement of physical properties of particulate spacers

The dispersibility of these particulate spacers was tested, and the results showed that the particulate spacers could be well dispersed in the form of single particles on glass plates. Also, tests of the adhesion of the particulate spacers to the glass plate indicated that fused resin material was present between the glass plate and the colored resin particles having a titanium oxide polymer intermediate layer on the surface thereof. The retention rate of the particulate spacers was 0.99.

### Example 16

Hot-melt type particulate spacers were obtained by covering divinylbenzene polymer particles of mean particle size 10.05 µm (standard deviation 0.35 µm) with a 0.2 µm-thick layer of carboxyl group-containing ethylene-vinyl acetate copolymer (DUMILAN C-2280).

A glass substrate of thickness 1.2 mm was obtained by forming an ITO electrode on one face of this glass plate, and the aforesaid particulate spacers were sprayed onto the glass substrate so as to distribute the particulate spacers with a surface density of 150 particles per square millimeter.

A pressing plate was prepared by coating polytetrafluoroethylene onto a steel plate 3 mm in thickness. This pressing plate was placed onto the glass substrate upon which the aforesaid particulate spacers had been distributed. Thereafter, using a hot press, the pressing plate and glass substrate were uniformly pressed together for 15 minutes at a temperature of 160°C and a pressure of 3 kg/cm². Then, the glass substrate and pressing plate were removed from the hot press, following which both were again pressed together for 15 minutes with a cold press under a pressure of 3 kg/cm².

The glass substrate and the pressing plate were then removed from the cold press, and the pressing plate was detached from the glass substrate. Examination of the state of adhesion of the particulate spacers on the glass substrate with a microscope at a magnification of 200 x revealed that almost all the particulate spacers had adhered to the glass substrate, and were not adhering to the pressing plate.

Next, another glass substrate of the same dimensions as the aforesaid glass substrate was prepared, and an epoxy resin adhesive agent was applied by screen printing to the periphery of this other substrate with a width of 1 mm and a thickness of 15 µm. This substrate was then superimposed upon the previously mentioned glass substrate, and the both were pressed together by means of a hot press at a temperature of 170°C and a pressure of 5 kg/cm² for 30 minutes, thereby hardening the adhesive agent.

The width of the gap between the electrodes in the liquid crystal display cell formed from a pair of glass substrates by the present procedure was determined using a liquid crystal cell gap measuring apparatus (Model TFM-120AFT, manufactured by OAK SEISAKUSHO CO., Ltd.), and was found to be 10.0 µm. This indicated that the dimensional precision of the gap between the pair of glass substrates assembled in this manner is within 0.1 µm.

Also, the liquid crystal display cell obtained in the aforesaid manner was subjected to continued vibration for a period of 50 hours with a vibration testing apparatus (20 Hz, amplitude 2 mm), after which the displacement of the aforesaid particulate spacers from their original sites of adhesion was investigated by microscopic observation. No signs of displacement of the particulate spacers were observed.

### Example 17

Particulate spacers were obtained by covering divinylbenzene polymer particles of mean particle size 9.02 µm (standard deviation 0.40 µm) with a 0.2 µm-thick layer of an adhesive agent composed of an epoxy resin (EPICOAT 1001) and the hardening agent 2-ethyl-4-methylimidazole (CUREZOL 2E4MZ).

A plastic substrate was prepared by forming an ITO electrode on one face of a polyethersulphone sheet with a thickness of 100 µm and area of 8 cm x 4 cm. The aforesaid particulate spacers were sprayed onto this substrate so as to distribute the particulate spacers with a surface density of 50 particles par square millimeter.

Then, the particulate spacers were pressed onto the substrate with a pressing plate in the same manner us described in Example 16, except that in the present case the pressure applied with the pressing plate was 1.5 kg/cm². This resulted in excellent adhesion of the particulate spacers to the substrate.

Next, a second substrate of the same dimensions as the aforesaid substrate was prepared, and an epoxy resin adhesive agent was applied to the periphery of this other substrate in the same manner as described in Example 16. This substrate was superimposed upon the previously mentioned substrate; and the both were pressed together by means of a hot press at a temperature of 170°C and a pressure of 2.5 kg/cm² for 30 minutes, thereby hardening the adhesive agent.

The width of the gap between the electrodes in the liquid crystal display cell formed from the pair of substrates by the present procedure was found to be within the range 8.7 ± 0.2 µm.

## Claims

1. A particulate spacer (2) for liquid crystal displays comprising a core particle (2b) and an adhesive resin layer (2a) which is formed on the surface of said core particle (2b) and which displays adhesion properties when heated to a predetermined temperature, characterized in that said adhesive resin layer (2a) is an epoxy resin layer made of an epoxy resin composition.

2. A particulate spacer (2) according to claim 1, wherein said core particle (2b) is a colored fine particle.

3. A particulate spacer (2) according to claim 1 or 2, wherein said particulate spacer (2) further comprises a titanium oxide polymer layer disposed between said core particle (2b) and adhesive resin layer (2a).

4. A method for producing particulate spacers (2), comprising the step of:
treating core particles (2b) with an organic titanate compound to form an intermediate layer on the surface of each of said core particles, said intermediate layer being made of titanium oxide polymer; characterized in that
said treated core particles are treated with an epoxy resin composition to form an epoxy resin layer as an adhesive resin layer (2a) on said titanium oxide polymer layer.

5. A particulate spacer (2) having a colored core particle (2b) and an adhesive resin layer (2a) which is formed on the surface of said core particle (2b) and which displays adhesion properties when heated to a predetermined temperature, characterized in that said adhesive resin layer (2a) is made of a hot-melt type resin layer, and in that said particulate spacer (2) further comprises a titanium oxide polymer layer disposed between said core particle (2b) and said hot-melt type resin layer.

6. A method for producing particulate spacers, characterized in that the method comprises the steps of:
treating a colored core particle (2b) with an organic titanate compound to form a titanium oxide polymer layer on said core particle (2b); and
treating said core particle (2b) having said titanium oxide polymer layer formed thereon with a hot-melt type resin to form a hot-melt type resin layer as an adhesive resin layer (2a) on said titanium oxide polymer layer.

7. A method for producing a liquid crystal display cell comprising: a pair of substrates (1) having an electrode (10) on the surface thereof, at least one of which is transparent, said substrates (1) being disposed at a constant gap so that said respective electrodes (10) of said substrates face to each other; a sealing material (4) filling the peripheral portion of the gap between said substrates (1); particulate spacers (2) according to any one of claims 1 to 3 or 5 dispersed in the gap space between said substrates (1) to maintain a constant gap between said substrates; and a liquid crystal composition (3) filling the gap between said substrates (1); wherein said method is characterised in that it comprises the steps of: dispersing said particulate spacers (2) over the surface of a first substrate (1); pressing said particulate spacers (2) onto said first substrate (1) with a pressing means to ensure the adhesion of said particulate spacers (2) to said first substrate (1); detaching said pressing means from said particulate spacers (2); placing a second substrate (1) above said first substrate (1) so as to interpose said particulate spacers (2) therebetween; and sealing the peripheral portion of the gap between said first and second substrates (1) with a sealing material (4).

8. A method for producing a liquid crystal display cell according to claim 7, wherein said pressing step is conducted whilst simultaneously applying heat.

## Patentansprüche

1. Teilchenförmiger Abstandshalter (2) für Flüssigkristallanzeigen, der ein Kernteilchen (2b) und eine Klebstoffharzschicht (2a) umfaßt, die auf der Oberfläche des Kernteilchens (2b) ausgebildet worden ist und Klebeeigenschaften zeigt, wenn sie auf eine vorbestimmte Temperatur erhitzt worden ist, dadurch gekennzeichnet, daß die Klebstoffharzschicht (2a) eine Epoxyharzschicht ist, die aus einer Epoxyharzzusammensetzung hergestellt worden ist.

2. Teilchenförmiger Abstandshalter (2) nach Anspruch 1, bei dem das Kernteilchen (2b) ein gefärbtes Feinteilchen ist.

3. Teilchenförmiger Abstandshalter (2) nach Anspruch 1 oder 2, bei dem der teilchenförmige Abstandshalter (2) ferner eine Titanoxidpolymerschicht umfaßt, die zwischen dem Kernteilchen (2b) und der Klebstoffharzschicht (2a) angeordnet ist.

4. Verfahren zur Herstellung eines teilchenförmigen Abstandshalters (2), bei dem
Kernteilchen (2b) mit einer organischen Titanatverbindung behandelt werden, um eine Zwischenschicht auf der Oberfläche von jedem der Kernteilchen zu bilden, wobei die Zwischenschicht aus Titanoxidpolymer gebildet wird,
dadurch gekennzeichnet, daß
die behandelten Kernteilchen mit einer Epoxyharzzusammensetzung behandelt werden, um eine Epoxyharzschicht als Klebstoffharzschicht (2a) auf der Titanoxidpolymerschicht zu bilden.

5. Teilchenförmiger Abstandshalter (2) mit einem gefärbten Kernteilchen (2b) und einer Klebstoffharzschicht (2a), die auf der Oberfläche des Kernteilchens (2b) gebildet worden ist und Klebeeigenschaften zeigt, wenn sie auf eine vorbestimmte Temperatur erhitzt worden ist, dadurch gekennzeichnet, daß die Klebstoffharzschicht (2a) aus einer Harzschicht vom heißschmelzenden Typ gebildet worden ist und daß der teilchenförmige Abstandshalter (2) ferner eine Titanoxidpolymerschicht umfaßt, die zwischen dem Kernteilchen (2b) und der Harzschicht vom heißschmelzenden Typ angeordnet ist.

6. Verfahren zur Herstellung von teilchenförmigen Abstandshaltern, dadurch gekennzeichnet, daß das Verfahren umfaßt:
eine Behandlung eines gefärbten Kernteilchens (2b) mit einer organischen Titanatverbindung, um eine Titanoxidpolymerschicht auf dem Kernteilchen (2b) zu bilden, und
eine Behandlung des Kernteilchens (2b) mit der darauf gebildeten Titanoxidpolymerschicht mit einem Harz vom heißschmelzenden Typ, um eine Harzschicht vom heißschmelzenden Typ als Klebstoffharzschicht (2a) auf der Titanoxidpolymerschicht zu bilden.

7. Verfahren zur Herstellung einer Flüssigkristallanzeigezelle, die ein paar von Substraten (1) mit einer Elektrode (10) auf der Oberfläche derselben umfaßt, wobei mindestens eine davon transparent ist und die Substrate (1) mit einem konstanten Spalt so angeordnet sind, daß die jeweiligen Elektroden (10) der Substrate einander gegenüberliegen, ein Siegelmaterial (4) umfaßt, das den Randbereich des Spaltes zwischen den Substraten (1) ausfüllt, teilchenförmige Abstandshalter (2) gemäß einem der Ansprüche 1 bis 3 oder 5 umfaßt, die in dem Spaltraum zwischen den Substraten (1) verteilt sind, um einen konstanten Spalt zwischen den Substraten aufrechtzuerhalten, und eine Flüssigkristallzusammensetzung (3) umfaßt, die den Spalt zwischen den Substraten (1) ausfüllt, wobei das Verfahren dadurch gekennzeichnet ist, daß die teilchenförmigen Abstandshalter (2) über die Oberfläche eines ersten Substrats (1) verteilt werden, die teilchenförmigen Abstandshalter (2) mit einem Preßmittel auf das erste Substrat (1) gepreßt werden, um die Haftung der teilchenförmigen Abstandshalter (2) an dem ersten Substrat (1) sicherzustellen, die Preßmittel von den teilchenförmigen Abstandshaltern (2) entfernt werden, ein zweites Substrat (1) über dem ersten Substrat (1) angeordnet wird, so daß die teilchenförmigen Abstandshalter (2) dazwischen angeordnet sind, und der Randbereich des Spaltes zwischen dem ersten und dem zweiten Substrat (1) mit einem Siegelmaterial (4) versiegelt wird.

8. Verfahren zur Herstellung einer Flüssigkristallanzeigezelle nach Anspruch 7, bei dem das Pressen durchgeführt wird, während gleichzeitig Hitze einwirkt.

## Revendications

1. Espaceur particulaire (2) pour des affichages à cristaux liquides comprenant une particule de noyau (2b) et une couche de résine adhésive (2a) qui se forme sur la surface de ladite particule de noyau (2b) et qui présente des propriétés d'adhérence quand on la chauffe à une température prédéterminée, caractérisé en ce que la couche de résine adhésive (2a) est une couche de résine époxy constituée d'une composition de résine époxy.

2. Espaceur particulaire (2) selon la revendication 1, dans lequel ladite particule de noyau (2b) est une particule fine colorée.

3. Espaceur particulaire (2) selon la revendication 1 ou 2, dans lequel ledit espaceur particulaire (2) comprend de plus une couche de polymère d'oxyde de titane disposée entre ladite particule de noyau (2b) et la couche de résine adhésive (2a).

4. Procédé pour produire des espaceurs particulaires (2), comprenant les étapes consistant:
à traiter des particules de noyau (26) avec un titanate organique pour former une couche intermédiaire sur la surface de chacune desdites particules de noyau, ladite couche intermédiaire étant constituée de polymère d'oxyde de titane; caractérisé en ce que
lesdites particules de noyau traitées sont traitées avec une composition de résine époxy pour former une couche de résine époxy en tant que couche de résine adhésive (2a) sur ladite couche de polymère d'oxyde de titane.

5. Espaceur particulaire (2) ayant une particule de noyau colorée (2b) et une couche de résine adhésive (2a) qui est formée sur la surface de ladite particule de noyau (2b) et qui présente des propriétés d'adhérence quand on la chauffe à une température prédéterminée, caractérisé en ce que ladite couche de résine adhésive (2a) est constituée d'une couche de résine de type hot-melt, et en ce que ledit espaceur particulaire (2) comprend de plus une couche de polymère d'oxyde de titane disposée entre ladite particule de noyau (2b) et ladite couche de résine de type hot-melt (colle par fusion à chaud).

6. Procédé pour produire des espaceurs particulaires, caractérisé en ce que le procédé comprend les étapes consistant:
- à traiter une particule de noyau colorée (2b) avec un titanate organique pour former une couche de polymère d'oxyde de titane sur ladite particule de noyau (2b); et
- à traiter ladite particule de noyau (2b) sur laquelle est formée une couche de polymère d'oxyde de titane, avec une résine de type hot-melt pour former une couche de résine de type hot-melt en tant que couche de résine adhésive (2a) sur ladite couche de polymère d'oxyde de titane.

7. Procédé pour produire une cellule d'affichage à cristaux liquides comprenant: une paire de substrats (1) ayant une électrode (10) sur leur surface, dont l'un au moins de ces substrats est transparent, lesdits substrats (1) étant disposés à un écartement constant de sorte que lesdites électrodes respectives (10) desdits substrats soient en face l'une de l'autre; une matière d'étanchéité (4) étant introduite de façon remplir la portion périphérique de l'intervalle entre lesdits substrats (1); des espaceurs particulaires (2) selon l'une quelconque des revendications 1 à 3 ou 5, dispersés dans l'espace intercalaire entre lesdits substrats (1) pour maintenir un écartement constant entre lesdits substrats; et une composition de cristaux liquides (3) remplissant l'intervalle entre lesdits substrats (1); procédé caractérisé en ce qu'il comprend les étapes consistant à disperser lesdits espaceurs particulaires (2) sur la surface d'un premier substrat (1); à presser lesdits espaceurs particulaires (2) sur ledit premier substrat (1) avec un moyen de pressage pour assurer l'adhérence desdits espaceurs particulaires (2) audit premier substrat (1); à détacher ledit moyen de pressage desdits espaceurs particulaires (2) ; à placer un deuxième substrat (1) au-dessus du premier substrat (1) de façon à disposer lesdits espaceurs particulaires (2) entre ceux-ci; et à fermer hermétiquement la portion périphérique de l'intervalle entre lesdits premier et deuxième substrats (1) avec une matière d'étanchéité (4).

8. Procédé pour produire une cellule d'affichage à cristaux liquides selon la revendication 7, dans lequel ladite étape de pressage est effectuée en chauffant simultanément.
